# EUROPÄISCHE PATENTSCHRIFT

(11) **EP 1 709 829 B1**
(45) Veröffentlichungstag und Bekanntmachung des Hinweises auf die Patenterteilung: **23.05.2007**
(21) Anmeldenummer: 05707835.4
(22) Anmeldetag: 24.01.2005
(51) Int. Cl.: H04Q 7/32, H04M 17/00

(54) **VERFAHREN UND SYSTEM FÜR DIE ÜBERTRAGUNG VON NUTZDATEN ZWISCHEN TELEKOMMUNIKATIONSGERÄTEN**
METHOD AND SYSTEM FOR TRANSMITTING USEFUL DATA BETWEEN TELECOMMUNICATION DEVICES
PROCEDE ET SYSTEME POUR TRANSMETTRE DES DONNEES UTILES ENTRE DES APPAREILS DE TELECOMMUNICATION

(30) Priorität: 29.01.2004 EP 04100328
(43) Veröffentlichungstag der Anmeldung: 11.10.2006
(73) Patentinhaber: Swisscom Mobile AG, 3050 Bern (CH)
(72) Erfinder: AEBI, Paul, CH-3303 Münchringen (CH)
(74) Vertreter: BOVARD AG
(86) Internationale Anmeldenummer: PCT/EP2005/050295
(87) Internationale Veröffentlichungsnummer: WO 2005/074310

(56) Entgegenhaltungen:
- WO-A-99/46926
- WO-A-03/079713
- DE-A- 10 039 434
- DE-A- 10 126 939
- US-A1- 2003 027 549
- US-B1- 6 332 579
- US-B1- 6 415 142
- "Wireless Identity Module, Part: Security, Version 12-July-2001, Wireless Application Protocol WAP-260-WIM-20010712-a" 12. Juli 2001 (2001-07-12), , XP002247392 Seite 8 Seite 15 - Seite 18

## Beschreibung

### Technisches Gebiet

Die vorliegende Erfindung betrifft ein Verfahren und System zur Übertragung von Nutzdaten zwischen Telekommunikationsgeräten. Die Erfindung bezieht sich insbesondere auf ein Verfahren und System einer auf vorausbezahlten Zugangsdaten basierten Übertragung von Nutzdaten zwischen Telekommunikationsgeräten.

### Stand der Technik

Ein Dienstanbieter muss für die Übermittlung von Nutzdaten zwischen Telekommunikationsgeräten eine Netzwerkinfrastruktur aufbauen und betreiben. Es ist bekannt, Mobiltelefone mit vorausbezahlten Gebühren zu betreiben, d.h. im so genannten Prepaid-Modus. Bei dieser Betriebsart, welche in der Regel kein Abonnement bei einem bestimmten Provider benötigt, führt der Provider ein Gebührenkonto, das durch die Anschlusskennung des Mobiltelefons und in der Regel durch weitere Kennungen, die in aller Regel verschlüsselt sind, identifiziert wird. Die Kennungen sind beim Provider und/oder im Chip der SIM-Karte (Subscriber Identity Module) gespeichert, die sich im Mobiltelefon befinden muss, damit dieses für Telekommunikationen betrieben werden kann. Solche zusätzlichen Kennungen sind beispielsweise Zertifikate, die die Berechtigung des Mobiltelefon-Nutzers bestätigen und die bei einem Verbindungsaufbau überprüft werden. Falls das Gebührenkonto beim Provider in Echtzeit nachgeführt werden soll, dann muss während einem Telefongespräch beispielsweise im Sekundentakt eine Nachführung gemäss dem für das Telefongespräch gültigen Tarif erfolgen. Dies im Gegensatz zu einem Gebührenkonto bei welchem Gespräche im Nachhinein abgerechnet werden und deshalb die Nachführung des Gebührenkontos beispielsweise nur bei Gesprächsende erfolgen muss. Mobiltelefone im Prepaid-Modus können zu einem sehr hohen technischem Aufwand für die Nachführung von Gebührenkontos führen.

In der Offenlegungsschrift DE 100 39 434 A1 wird ein Verfahren zur Nachführung eines Zählers eines Endgeräts zur Gebührenabrechnung beschrieben. Der Zähler wird autark oder gemäss Steuerbefehlen des Dienstanbieters während einem Telefongespräch in einem bestimmten Takt nachgeführt und die Berechtigung zur Nutzung von Diensten wird gegenüber dem Dienstanbieter in einem bestimmten Takt bestätigt. In einer Ausgestaltung wird der Zähler durch den Dienstanbieter mittels Steuerbefehlen gesteuert oder überprüft. Es ist ein Nachteil, dass der Dienstanbieter einen Zähler braucht, um zu Überprüfen, dass das Zertifikat zur Nutzung von Diensten im Takt gesendet wurde. Es ist weiter ein Nachteil, dass zur Steuerung des Zählers oder zur Überprüfung des Zählers beim Dienstanbieter ein entsprechendes Zählerabbild geführt werden muss.

Aus der internationalen Patentanmeldung WO 03/079713 ist ein Verfahren zum Betrieb von Mobilfunk-Endgeräten bekannt, bei dem WIM-Funktionalitäten (Wireless Identification Module) bereitgestellt und abgerechnet werden, dadurch gekennzeichnet, dass die WIM intern, d.h. im Endgerät bzw. dem dort befindlichen SIM-Identifikationsmodul, realisiert wird. Dabei wird intern jede vom Teilnehmer initiierte Signatur gezählt, und zwar von einem Ausgangszustand zurück, bis die voreingestellte Anzahl von Signaturen erreicht ist. Dann wird das Gerät bis zu einer erneuten Signaturzahl-Aufladung gesperrt. Nachteilig an diesem Verfahren ist es, dass die Behandlung der Signatur, d.h. der digitalen Daten der Zugangsrechte, mit Ausnahme der Sperr- und Freischaltungen keine Datenverarbeitung vorsieht und nur eine einfache Zählfunktion ausübt, ohne Überprüfung des Volumens der mit einer einzelnen Signatur zu versehenden digitalen Daten, so dass eine Führung von Nutzkonten beim Betreiber (Provider) immer noch erforderlich ist, wobei bei einem Telefongespräch stets eine Verbindung vom MSC (Mobile Switching Center) zum Provider aufgebaut und unterhalten werden muss. Bei diesem Schritt können Fehler auftreten, z.B. infolge Übermittlungsstörungen, so dass die Nutzkonten verfälscht werden können. Es ist weiter ein Nachteil, dass auch keine Volumenbasierte Abrechnung möglich ist.

### Offenbarung der Erfindung

Es ist eine Aufgabe der Erfindung, ein neues Verfahren und System zur Übertragung von Nutzdaten zwischen Telekommunikationsgeräten vorzu schlagen, welche die oben genannten Nachteile des Standes der Technik nicht aufweisen. Insbesondere soll ein automatisiertes, einfaches und rationelles Verfahren und System vorgeschlagen werden, das ganz allgemein die Sicherheit der Abrechnung der Nutzdaten sowie auch die Zuverlässigkeit der Behandlung der digitalen Daten der Zugangsrechte verbessert und zudem beschleunigt.

Gemäss der vorliegenden Erfindung wird dieses Ziel insbesondere durch die Elemente der unabhängigen Ansprüche erreicht Weitere vorteilhafte Ausführungsformen gehen ausserdem aus den abhängigen Ansprüchen und der Beschreibung hervor.

Insbesondere werden diese Ziele durch die Erfindung dadurch erreicht, dass ein Zentralmodul vorausbezahlte Zugangsdaten erzeugt, wobei die vorausbezahlten Zugangsdaten einen ersten digitalen Schlüssel und Kontrolldaten umfassen, und wobei die vorausbezahlten Zugangsdaten in einem Speichermodul des ersten Telekommunikationsgeräts abgespeichert werden, dass das Zentralmodul einen dem ersten digitalen Schlüssel zugeordneten zweiten digitalen Schlüssel erzeugt, wobei der zweite digitale Schlüssel auf einer oder mehreren Steuereinheiten des Telekommunikationsnetzwerks abgespeichert wird, dass das erste Telekommunikationsgerät basierend auf Kontrolldaten der vorausbezahlten Zugangsdaten ein Gültigkeitskriterium ermittelt und Nutzdaten des ersten Telekommunikationsgeräts mittels des ersten Schlüssels codiert, solange das Gültigkeitskriterium erfüllt ist, und dass das erste Telekommunikationsgerät codierte Nutzdaten an die Steuereinheit übermittelt, wobei die Steuereinheit mittels des zweiten digitalen Schlüssels überprüft, dass die codierten Nutzdaten mit dem ersten digitalen Schlüssel codiert sind, wobei die Steuereinheit bei einer erfolgreichen Überprüfung die codierten Nutzdaten decodiert, und wobei die Steuereinheit die decodierten Nutzdaten an das zweite Telekommunikationsgerät übermittelt. Die Nutzdaten können beispielsweise aus digitalisierten Sprachsignalen oder aus irgendwelchen anderen Daten bestehen. Die erfindungsgemässe Lösung hat u.a. den Vorteil, dass für die Abrechnung von im Prepaid-Modus getätigte Gespräche eines Mobilfunkgeräts kein Gebührenkonto einer Zentraleinheit des Dienstanbieters nachgeführt werden muss, dass insbesondere eine Volumenbasierte Abrechnung ermöglicht wird, und dass der Dienstanbieter zu jedem Zeitpunkt über die Berechtigung zur Führung eines Gesprächs informiert bleibt.

In einer Ausführungsvariante werden die im Speichermodul des ersten Telekommunikationsgeräts abgespeicherten vorausbezahlten Zugangsdaten bei der Codierung von Nutzdaten modifiziert und/oder gelöscht. Diese Ausführungsvariante hat u.a. den Vorteil, dass beispielsweise Gespräche mit einem Mobilfunkgerät entsprechend der Dauer oder der Datenmenge abgerechnet werden können.

In einer anderen Ausführungsvariante umfassen die im Speichermodul des ersten Telekommunikationsgeräts abgespeicherten vorausbezahlten Zugangsdaten einen Geldbetragswert, wobei dieser Geldbetragswert bei der Codierung von Nutzdaten modifiziert und/oder gelöscht wird. Diese Ausführungsvariante hat u.a. den Vorteil, dass dem Benutzer der Wert der gespeicherten vorausbezahlten Zugangsdaten einfach anzeigbar ist oder dass gespeicherte vorausbezahlte Zugangsdaten einfach zwischen Telekommunikationsgeräten transferierbar sind.

In einer anderen Ausführungsvariante werden die vorausbezahlten Zugangsdaten auf einem SIM-Modul des ersten Telekommunikationsgeräts abgespeichert. Diese Ausführungsvariante hat u.a. den Vorteil, dass die vorausbezahlten Zugangsdaten in einem durch einen Dienstanbieter kontrollierbaren Speicherbereich abspeicherbar sind oder dass durch ein Umstecken des SIM-Moduls vorausbezahlte Zugangsdaten leicht zwischen Telekommunikationsgeräten transferierbar sind.

In einer Ausführungsvariante umfasst die Codierung der Nutzdaten eine digitale Verschlüsselung und/oder digitale Signierung und die Decodierung der Nutzdaten eine entsprechende digitale Entschlüsselung und/oder Verifikation einer digitalen Signatur. Eine solche Ausführungsvariante hat u.a. den Vorteil, dass weit verbreitete Module von Telekommunikationsgeräten und Steuereinheiten für die Codierung und Decodierung von Nutzdaten verwendbar sind.

In einer Ausführungsvariante umfassen die vorausbezahlten Zugangsdaten eine Berechtigung für die Codierung einer bestimmbaren Nutzdatenmenge, wobei die vorausbezahlten Zugangsdaten gelöscht werden, sobald die Codierung der bestimmbaren Nutzdatenmenge abgeschlossen ist. Diese Ausführungsvariante hat u.a. den Vorteil, dass vorausbezahlte Zugangsdaten auf dem ersten Telekommunikationsgerät sehr effizient verwaltbar sind.

In einer Ausführungsvariante sind mehrere Blöcke mit vorausbezahlten Zugangsdaten im Speichermodul des ersten Telekommunikationsgeräts abspeicherbar. Diese Ausführungsvariante hat u.a. den Vorteil, dass bei einem Fehlschlagen des Gültigkeitskriteriums für die Codierung von Nutzdaten sehr effizient auf einen nächsten Block mit vorausbezahlten Zugangsdaten umgeschaltet werden kann.

In einer Ausführungsvariante umfassen die Kontrolldaten mehrere Blöcke, wobei für jeden Block die Ermittlung eines Gültigkeitskriteriums sowie die Modifikation oder Löschung des entsprechenden Blocks von Kontrolldaten durchführbar ist. Diese Ausführungsvariante hat u.a. den Vorteil, dass der erste digitale Schlüssel mehrfach verwendbar ist und der Speicherbedarf für die Speicherung der vorausbezahlten Zugangsdaten reduzierbar ist.

An dieser Stelle soll festgehalten werden, dass sich die vorliegende Erfindung neben dem erfindungsgemässen Verfahren auch auf ein System zur Ausführung dieses Verfahrens bezieht. Ferner beschränkt es sich nicht auf das genannte System und Verfahren, sondern bezieht sich ebenso auf ein Computerprogrammprodukt zur Realisierung des erfindungsgemässen Verfahrens.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt schematisch ein Prepaid-System des Standes der Technik.
Figur 2 illustriert schematisch ein System zur Ausführung des erfindungsgemässen Verfahrens.

### Ausführungsformen der Erfindung

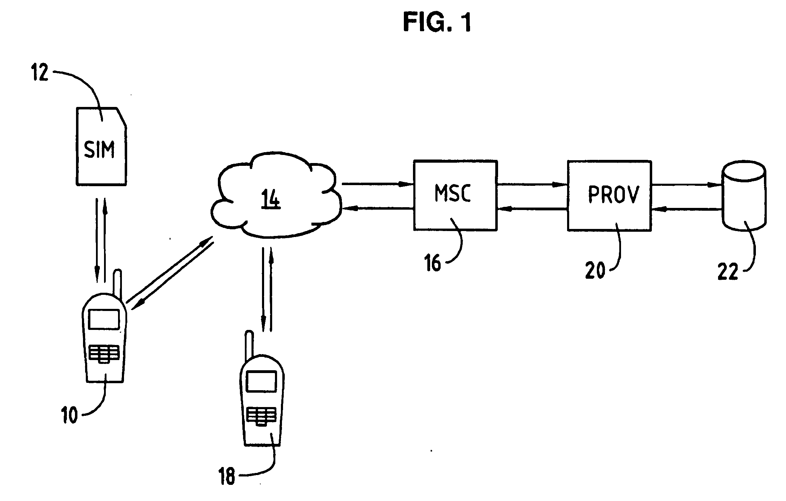

Figur 1 illustriert schematisch eine Architektur des Standes der Technik. In diesem Ausführungsbeispiel ist ein Mobiltelefongerät 10 dargestellt, in das eine Prepaid-SIM-Karte 12 einsetzbar ist. Über Funk lässt sich das Telefongerät 10 mit dem Mobilfunknetzwerk 14 verbinden. Das Kommunikationsnetz 14 umfasst beispielsweise ein GSM- (Global System for Mobile Communications) oder ein UMTS-Netz (Universal Mobile Telecommunications System), oder ein satellitenbasiertes Mobilfunknetz, und/oder ein oder mehrere Festnetze, beispielsweise das öffentlich geschaltete Telefonnetz, das weltweite Internet oder ein geeignetes LAN (Local Area Network) oder WAN (Wide Area Network). Insbesondere kann es auch ISDN- und XDSL-Verbindungen umfassen. Dieses Netzwerk steht wiederum in Datenaustausch-Verbindung mit dem MSC (Mobile Switching Center) 16. Das Netzwerk und das MSC sind nach dem GSM-Standard (Global System for Mobile Communications) aufgebaut. Der gewünschte Telefonteilnehmer, der mit dem Mobiltelefon 10 angewählt werden soll, ist mit 18 bezeichnet. Bei diesem Gerät kann es sich um ein Festtelefon, ein Mobiltelefon oder um eine beliebige andere Telekommunikations-Einheit handeln (z.B. auch ein Fax).

Mit dem MSC steht ein Provider 20 (PROV) mit einer Provider-Datenbank 22 in Verbindung, da ja für die Gebühren der zu führenden Prepaid-Konten eine entsprechende Kontenstelle vorhanden sein muss. Diese befindet sich in der Datenbank 22. Die Daten des in Frage stehenden Prepaid-Kontos werden in der Datenbank 22 gespeichert und dort beim Aktivieren des Teilnehmerkontos nachgeführt.

Der Ablauf des Verbindungsaufbaus, der auch die Prüfung der Berechtigung (Signatur) und die Kontenüberwachung und -führung umfasst, ist allgemein bekannt und soll nicht in Einzelheiten beschrieben werden.

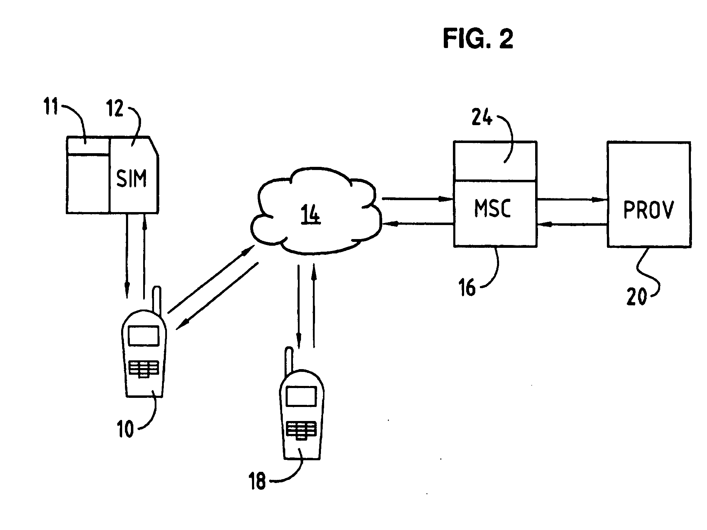

Fig. 2 zeigt nun schematisch den Aufbau eines erfindungsgemässen Systems. Elemente und Bestandteile, die in Fig. 1 und 2 die gleichen bzw. einander ähnlich sind, tragen die gleichen Bezugszeichen.

Auf der SIM-Karte 12 befindet sich ein zusätzliches Speichermodul 11 für die Abspeicherung von vorausbezahlten Zugangsdaten, wie z.B. DRM-Daten (DRM: Digital Rights Management), beispielsweise in verschlüsselter Form, bevorzugt in digital verschlüsselter Form. Dabei ist das Speichermodul 11 vorzugsweise physikalisch vom übrigen Speicherfeld des SIM-Moduls 12 getrennt. Beim Aufladen der SIM-Karte, beispielsweise von einer für diesen Zweck eingerichteten Aufladekarte oder aber von einer Bankkreditkarte, werden die vorausbezahlten Zugangsdaten beispielsweise über den Provider 20 und den Server 16 an die SIM-Karte 12 übermittelt und dort im Speichermodul 11 abgespeichert. Zugleich wird auf einer Steuereinheit, beispielsweise in einem Speichermodul 24 eines MSC (Mobile Switching Center), ein zweiter digitaler Schlüssel, welcher dem ersten digitalen Schlüssel wie nachfolgend beschrieben zugeordnet ist, abgespeichert. Das SIM-Modul erteilt dem Mobiltelefon das Recht, Gespräche unter bestimmten Nutzungsbedingungen (z.B. Ziel, Dauer) mit den vorausbezahlten Zugangsdaten zu führen, d.h. die Nutzdaten bzw. die Gesprächsdaten mittels einem ersten digitalen Schlüssels der vorausbezahlten Zugangsdaten zu codieren, zu verschlüsseln und/oder zu signieren. Die Nutzdaten können z.B. speicherbar sein (beispielsweise SMS (Short Message Service), MMS (Multimedia Message Service), MP3 der Moving Picture Experts Group (MPEG) etc.) und/oder nicht speicherbar, wie z.B. ein Datastream und/oder Voice Data etc.

Beim Telefonieren mit dem Gerät 10 werden die Tondaten und/oder Nutzdaten codiert, d.h. mit dem ersten digitalen Schlüssel verschlüsselt und/oder signiert und/oder andersartig geeignet kombiniert, und an das MSC 16 übertragen. Auf dem MSC 16 wird mittels eines zweiten digitalen Schlüssels überprüft, ob die codierten Daten mit dem ersten digitalen Schlüssel codiert sind. Ist diese Überprüfung erfolgreich, dann werden die codierten Nutzdaten decodiert, also beispielsweise entschlüsselt und/oder es wird eine Signatur entfernt. Die decodierten Nutzdaten werden anschliessend an ein zweites Telekommunikationsgerät übermittelt für welches der Benutzer des ersten Telekommunikationsgeräts die Übertragung wünscht oder eingestellt hat. Während der Übermittlung werden die anfallenden Gebühren, welche wie üblich eine Funktion mehrerer Parameter (Dauer, Entfernung, Tageszeit, Art des Gerätes 18) sind, von Kontrolldaten der vorausbezahlten Zugangsdaten abgebucht. Wenn der vorausbezahlte Betrag, dessen Daten auf dem SIM-Modul gespeichert sind, aufgebraucht ist, werden die vorausbezahlten Zugangsdaten annulliert und die Übertragung wird abgebrochen, eventuell nach einer entsprechenden Warnung. Die Wamungsdaten sind beispielsweise ebenfalls in den Kontrolldaten der vorausbezahlten Zugangsdaten gespeichert und werden von dort abgerufen. Das Speichermodul der SIM-Karte kann aber auch so eingerichtet sein, dass gleichzeitig mehrere Blöcke mit vorausbezahlten Zugangsdaten abspeicherbar sind. In diesem Fall kann nachdem ein erster Block mit vorausbezahlten Zugangsdaten annulliert wurde zuerst überprüft werden, ob ein weiterer Block mit vorausbezahlten Zugangsdaten verfügbar ist, wobei ein solcher Block für die Fortsetzung einer bestehenden Gesprächsverbindung verwendbar ist

Vor erneutem Aufladen des Datenspeichers mit vorausbezahlten Zugangsdaten ist keine weitere Übermittlung oder aber nur bestimmte, begrenzte Übermittlungen (Notruf, Aufladenummem) von Nutzdaten zu anderen Telekommunikationsgeräten möglich.

Aus Obigem geht hervor, dass die Erfindung eine Möglichkeit schafft, das Telefonkonto beim Prepaid-Betrieb direkt auf dem Mobiltelefon zu führen und den Umweg über ein Provider-Konto zu vermeiden. Es ist dem Fachmann klar, dass der Erfindungsgedanke und das darauf beruhende, hierin beanspruchte Verfahren auch mit anderen Bauelementen und Systemeinheiten verwirklicht werden kann.

## Patentansprüche

1. Verfahren zur Übertragung von Nutzdaten zwischen einem ersten Telekommunikationsgerät (10) und einem zweiten Telekommunikationsgerät (18) eines Telekommunikationsnetzwerkes (14), wobei ein Zentralmodul vorausbezahlte Zugangsdaten erzeugt, wobei die vorausbezahlten Zugangsdaten einen ersten digitalen Schlüssel und Kontrolldaten umfassen, und wobei die vorausbezahlten Zugangsdaten in einem Speichermodul (11) des ersten Telekommunikationsgeräts (10) abgespeichert werden, und wobei das Zentralmodul einen dem ersten digitalen Schlüssel zugeordneten zweiten digitalen Schlüssel erzeugt, wobei der zweite digitale Schlüssel auf einer oder mehreren Steuereinheiten (16) des Telekommunikationsnetzwerks (14) abgespeichert wird, **dadurch gekennzeichnet,**
**dass** das erste Telekommunikationsgerät (10) basierend auf Kontrolldaten der vorausbezahlten Zugangsdaten ein Gültigkeitskriterium ermittelt und Nutzdaten des ersten Telekommunikationsgeräts mittels des ersten Schlüssels codiert, solange das Gültigkeitskriterium erfüllt ist, und
**dass** das erste Telekommunikationsgerät (10) codierte Nutzdaten an die Steuereinheit (16) übermittelt, wobei die Steuereinheit (16) mittels des zweiten digitalen Schlüssels überprüft, dass die codierten Nutzdaten mit dem ersten digitalen Schlüssel codiert sind, wobei die Steuereinheit (16) bei einer erfolgreichen Überprüfung die codierten Nutzdaten decodiert, und wobei die Steuereinheit (16) die decodierten Nutzdaten an das zweite Telekommunikationsgerät (18) übermittelt.

2. Verfahren nach Anspruch 1, **dadurch gekennzeichnet, dass** die im Speichermodul (11) des ersten Telekommunikationsgeräts (10) abgespeicherten vorausbezahlten Zugangsdaten bei der Codierung von Nutzdaten modifiziert und/oder gelöscht werden.

3. Verfahren nach einem der Ansprüche 1 bis 2, **dadurch gekennzeichnet, dass** die im Speichermodul (11) des ersten Telekommunikationsgeräts (10) abgespeicherten vorausbezahlten Zugangsdaten einen Geldbetragswert umfassen, wobei dieser Geldbetragswert bei der Codierung von Nutzdaten modifiziert und/oder gelöscht wird.

4. Verfahren nach einem der Ansprüche 1 bis 3, **dadurch gekennzeichnet, dass** die vorausbezahlten Zugangsdaten auf einem SIM-Modul (12) des ersten Telekommunikationsgeräts abgespeichert werden.

5. Verfahren nach einem der Ansprüche 1 bis 4, **dadurch gekennzeichnet, dass** die Codierung der Nutzdaten eine digitale Verschlüsselung und/oder digitale Signierung umfasst und dass die Decodierung der Nutzdaten eine entsprechende digitale Entschlüsselung und/oder Verifikation einer digitalen Signatur umfasst.

6. Verfahren nach einem der Ansprüche 1 bis 5, **dadurch gekennzeichnet, dass** die vorausbezahlten Zugangsdaten eine Berechtigung für die Codierung einer bestimmbaren Nutzdatenmenge umfassen, wobei die vorausbezahlten Zugangsdaten gelöscht werden, sobald die Codierung der bestimmbaren Nutzdatenmenge abgeschlossen ist.

7. Verfahren nach einem der Ansprüche 1 bis 6, **dadurch gekennzeichnet, dass** mehrere Blöcke mit vorausbezahlten Zugangsdaten im Speichermodul (11) des ersten Telekommunikationsgeräts (10) abspeicherbar sind.

8. Verfahren nach einem der Ansprüche 1 bis 7, **dadurch gekennzeichnet, dass** die Kontrolldaten mehrere Blöcke umfassen, wobei für jeden Block die Ermittlung eines Gültigkeitskriteriums sowie die Modifikation oder Löschung des entsprechenden Blocks von Kontrolldaten durchführbar ist.

9. System zur Ausführung des Verfahrens nach einem der Ansprüche 1 bis 8, mit einem ersten Telekommunikationsgerät (10), welches ein Speichermodul (11) umfasst, mit einem MSC (Mobile Switching Center) (16), das mit dem ersten Telekommunikationsgerät (10) über ein Telekommunikationsnetzwerk (14) verbindbar ist, wobei ein Zentralmodul Mittel umfasst zur Erzeugung von vorausbezahlten Zugangsdaten mit einem ersten digitalen Schlüssel sowie mit Kontrolldaten und wobei das Zentralmodul Mittel umfasst zur Erzeugung von einem entsprechenden zweiten digitalen Schlüssel, wobei das Speichermodul (11) des ersten Telekommunikationsgeräts (10) Mittel umfasst zur Abspeicherung der vorausbezahlten Zugangsdaten, und wobei das MSC (16) Mittel umfasst zur Abspeicherung des zweiten digitalen Schlüssels,
**dadurch gekennzeichnet,**
**dass** das erste Telekommunikationsgerät (10) Mittel umfasst zu einer auf den Kontrolldaten der abgespeicherten vorausbezahlten Zugangsdaten basierten Überprüfung von Gültigkeitskriterien, zur Codierung von Nutzdaten des ersten Telekommunikationsgeräts (10) mittels des ersten digitalen Schlüssels sowie zur Übermittlung der codierten Nutzdaten an das MSC (16), und
**dass** das MSC (16) Mittel umfasst zur Überprüfung der codierten Nutzdaten mittels des zweiten digitalen Schlüssels, dass die codierten Nutzdaten mit dem ersten Schlüssel codiert sind, und zur Decodierung der codierten Nutzdaten bei erfolgreicher Überprüfung sowie zur Übermittlung der Nutzdaten an ein zweites Telekommunikationsendgerät (18).

10. System nach Anspruch 9, **dadurch gekennzeichnet, dass** das erste Telekommunikationsgerät (11) ein Verschlüsselungsmodul oder ein Signierungsmodul zur Verschlüsselung oder Signierung von Nutzdaten mittels des ersten digitalen Schlüssels umfasst, und dass das MSC (16) ein Entschlüsselungsmodul oder ein Signaturverifikationsmodul zur Entschlüsselung oder Verifikation der Signatur von verschlüsselten oder signierten Nutzdaten mittels des zweiten digitalen Schlüssels umfasst.

## Claims

1. Method of transmitting service data between a first telecommunication device (10) and a second telecommunication device (18) of a telecommunication network (14), a central module generating prepaid access data, the prepaid access data comprising a first digital key and control data, and the prepaid access data being stored in a memory module (11) of the first telecommunication device (10), and the central module generating a second digital key, assigned to the first digital key, the second digital key being stored on one or more control units (16) of the telecommunication network (14),
**characterised**
**in that** the first telecommunication device (10) determines a validity criterion based on control data of the prepaid access data, and encodes service data of the first telecommunication device by means of the first key, as long as the validity criterion is fulfilled, and
**in that** the first telecommunication device (10) transmits encoded service data to the control unit (16), the control unit (16) checking by means of the second digital key that the encoded service data are encoded with the first digital key, upon successful check the control unit (16) decoding the encoded service data, and the control unit (16) transmitting the decoded service data to the second telecommunication device (18).

2. Method according to claim 1, **characterised in that** the prepaid access data stored in the memory module (11) of the first telecommunication device (10) are modified and/or deleted during the encoding of service data.

3. Method according to one of the claims 1 to 2, **characterised in that** the prepaid access data stored in the memory module (11) of the first telecommunication device (10) include a monetary amount value, this monetary amount valueeing modified and/or deleted during the encoding of service data.

4. Method according to one of the claims 1 to 3, **characterised in that** the prepaid access data are stored on an SIM module (12) of the first telecommunication device.

5. Method according to one of the claims 1 to 4, **characterised in that** the encoding of the service data includes a digital encryption und/or digital signature, and **in that** the decoding of the service data includes a corresponding digital decryption and/or verification of a digital signature.

6. Method according to one of the claims 1 to 5, **characterised in that** the prepaid access data include an authorization for the encoding of a definable quantity of service data, the prepaid access data being deleted as soon as the encoding of the definable amount of service data has been completed.

7. Method according to one of the claims 1 to 6, **characterised in that** a multiplicity of blocks with prepaid access data are storable in the memory module (11) of the first telecommunication device (10).

8. Method according to one of the claims 1 to 7, **characterised in that** the control data comprise a multiplicity of blocks, the determination of a validity criterion as well as the modification or deletion of the corresponding block of control data being feasible for each block.

9. System for carrying out the method according to one of the claims 1 to 8, with a first telecommunication device (10), which includes a storage module (11), with an MSC (Mobile Switching Center) (16), which is connectible to the first telecommunication device (10) via a telecommunication network (14), a central module comprising means for generation of prepaid access data with a first digital key and with control data, and the central module comprising means for generation of a corresponding second digital key, the storage module (11) of the first telecommunication device (10) comprising means for storing the prepaid access data, and the MSC (16) comprising means for storing the second digital key, **characterised**
**in that** the first telecommunication device (10) comprises means for a checking of validity criteria based on the control data of the stored prepaid access data, for coding service data of the first telecommunications device (10) by means of the first digital key, as well as of transmitting the encoded service data to the MSC (16), and
**in that** the MSC (16) comprises means of checking the encoded service data by mean of the second digital key that the encoded service data are encoded with the first key, and, upon successful check, are sent to a second telecommunications terminal (18) for decoding of the encoded service data as well as for transmitting the service data to a second telecommunication terminal (18).

10. The system according to claim 9, **characterised in that** the first telecommunication device (11) <sic. (10)> includes an encryption module or a signature module for encrypting or signing service data by means of the first digital key, and **in that** the MSC (16) comprises a decryption module or a signature verification module for decryption or verification of the signature of encrypted or signed service data by means of the second digital key.

## Revendications

1. Procédé pour la transmission de données utiles entre un premier appareil de télécommunication (10) et un second appareil de télécommunication (18) d'un réseau de télécommunication (14), un module central générant des données d'accès prépayées, les données d'accès prépayées comprenant une première clé numérique et des données de contrôle et les données d'accès prépayées étant stockées dans le module de mémoire (11) du premier appareil de télécommunication (10) et le module central générant une seconde clé numérique associée à la première clé numérique, la seconde clé numérique étant stockée sur une ou plusieurs unités de commande (16) du réseau de télécommunication (14), **caractérisé en ce que**
le premier appareil de télécommunication (10) établit, en se basant sur des données de contrôle prépayées, un critère de validité et code des données utiles du premier appareil de télécommunication au moyen de la première clé tant que le critère de validité est satisfait et
**en ce que** le premier appareil de télécommunication (10) transmet des données utiles codées à l'unité de commande (16), l'unité de commande (16) vérifiant au moyen de la seconde clé numérique, que les données utiles codées soient codées avec la première clé numérique, l'unité de commande (16) décodant au cours d'une vérification positive les données utiles codées et l'unité de commande (16) transmettant les données utiles décodées au second appareil de télécommunication (18).

2. Procédé selon la revendication 1, **caractérisé en ce que** les données d'accès prépayées dans le module de stockage (11) du premier appareil de télécommunication (10) sont modifiées et/ou supprimées lors du codage de données utiles.

3. Procédé selon l'une des revendications 1 à 2, **caractérisé en ce que** les données d'accès prépayées dans le module de stockage (11) du premier appareil de télécommunication (10) comprennent une valeur monétaire, cette valeur monétaire étant supprimée et/ou modifiée lors du codage de données utiles.

4. Procédé selon l'une des revendications 1 à 3, **caractérisé en ce que** les données d'accès prépayées sont stockées sur un module SIM (12) du premier appareil de télécommunication.

5. Procédé selon l'une des revendications 1 à 4, **caractérisé en ce que** le codage des données utiles comprend un cryptage numérique et/ou une signature numérique et **en ce que** le décodage des données utiles comprend un décryptage numérique correspondant et/ou une vérification d'une signature numérique.

6. Procédé selon l'une des revendications 1 à 5, **caractérisé en ce que** les données d'accès prépayées comprennent une rectification pour le codage d'une quantité déterminable des données utiles, les données d'accès prépayées étant supprimées, dès que le codage de la quantité de données utiles déterminables est terminé.

7. Procédé selon l'une des revendications 1 à 6, **caractérisé en ce que** plusieurs blocs de données d'accès prépayées sont mémorisables dans le module de mémoire (11) du premier appareil de télécommunication (10).

8. Procédé selon l'une des revendications 1 à 7, **caractérisé en ce que** les données de contrôle comprennent plusieurs blocs, pour chaque bloc la détermination d'un critère de validité ainsi que la modification ou la suppression du bloc correspondant de données de contrôle pouvant être réalisées.

9. Système pour la mise en oeuvre du procédé selon l'une des revendications 1 à 8, avec un premier appareil de télécommunication (10) qui comprend un module de stockage (11) avec un MSC (Mobile Switching Center = centre de commutation mobile) (16) qui peut être relié au premier appareil de télécommunication (10) par un réseau de télécommunication (14), un module central comprenant des moyens pour la génération de données d'accès prépayées avec une première clé numérique ainsi que des données de contrôle et le module central comprenant des moyens pour la génération d'une seconde clé numérique correspondante, le module de mémoire (11) du premier appareil de télécommunication (10) comprenant des moyens pour le stockage de données d'accès prépayées et le MSC (16) comprenant des moyens pour le stockage de la seconde clé numérique, **caractérisé en ce que**
le premier appareil de télécommunication (10) comprend des moyens pour une vérification basée sur les données de contrôle des données d'accès prépayées stockées, de critères de validité, pour le codage de données utiles du premier appareil de télécommunication (10) au moyen de la première clé numérique ainsi que pour la transmission des données utiles codées au MSC (16) et
**en ce que** le MSC (16) comprend des moyens pour la vérification des données utiles connues au moyen de la seconde clé numérique, **en ce que** les données utiles codées sont codées avec la première clé et pour le décodage des données codées utiles en cas de vérification positive, ainsi que pour la transmission des données utiles à un second terminal de communication (18).

10. Système selon la revendication 9, **caractérisé en ce que** le premier appareil de télécommunication (11) comprend un module de cryptage ou un module de signature pour le cryptage ou la signature de données utiles au moyen de la première clé numérique et **en ce que** le MSC (16) comprend un module de décryptage ou un module de vérification de signature pour le décryptage ou la vérification de la signature de données utiles cryptées ou signées au moyen d'une seconde clé numérique.
